# EUROPÄISCHE PATENTANMELDUNG

(11) **EP 0 688 642 A2**
(43) Veröffentlichungstag der Anmeldung: **27.12.1995**
(21) Anmeldenummer: 95109462.2
(22) Anmeldetag: 19.06.1995
(51) Int. Cl.: B29B 17/00, B29B 13/10, B29C 43/06

(54) **Formteil und Verfahren zu seiner Herstellung**

(30) Priorität: 23.06.1994 US 264659
(71) Anmelder: Eduard Küsters Maschinenfabrik GmbH & Co. KG, D-47805 Krefeld (DE)
(72) Erfinder: Funger, Bernhard, D-47839 Krefeld (DE); Grüber Heinz, D-47918 Tönisvorst (DE)
(74) Vertreter: Palgen, Peter, Dr. Dipl.-Phys.

(57) **Zusammenfassung**

Teppichmaterial (10) mit mindestens einem Anteil an ungereinigtem Altteppich wird zu einem faserartigen Gewölle zerkleinert. Das Teppichmaterial enthält ein niedrigschmelzendes thermoplastisches Bindemittel, z.B. Polypropylen, welches aus dem Altteppich stammen oder zugesetzt sein kann. Auf mindestens einer Seite des Teppichmaterials (1O) ist eine Deckschicht aus Holzspänen vorgesehen. Das Teppichmaterial (1O) wird zusammen mit den die Deckschichten ergebenden Schichten (14,14') der beleimten Holzspäne bei einer über dem Erweichungspunkt des thermoplastischen Bindemittels, jedoch unter dem Erweichungspunkt etwaiger sonstiger thermoplastischer Anteile des Teppichmaterials liegenden Temperatur zu dem Formteil bzw. der Platte verpreßt.

## Beschreibung

Die Erfindung bezieht sich auf ein Formteil nach dem Oberbegriff des Anspruchs 1 und ein Verfahren zu seiner Herstellung nach dem Oberbegriff des Anspruchs 11.

Ein Problem wachsender Bedeutung stellt die Entsorgung von sogenannten Altteppichen dar, das heißt von Teppichmaterial, welches in Wohnungen oder Objekten manche Jahre als Auslegeware gelegen hat und nun aus Gründen der Abnutzung oder der Renovierung entfernt und durch neue Ware ersetzt wird. Die Altteppiche fallen in einer erheblichen Menge an, die einen bedeutenden Anteil der Teppichproduktion ausmacht. Bisher war es üblich, Altteppiche, die in der Bundesrepublik als Sondermüll gelten, zu verbrennen oder zu deponieren, wobei einschneidende behördliche Auflagen zu beachten sind.

Es sind aber bereits Tendenzen bemerkbar, die Entsorgungslast auf die Teppichhersteller zu verlagern und sie zu verpflichten, Altteppiche in einer bestimmten Proportion zur Produktion zurückzunehmen. Die Verantwortung für das Altmaterial landet auf diese Weise wieder beim Hersteller.

Besondere Schwierigkeiten bei Überlegungen zur Wiedernutzung des textilen Fasermaterials in den Altteppichen liegen einerseits in der fehlenden Sortenreinheit und andererseits in der Belastung des textilen Material mit Fremdstoffen.

Die fehlende Sortenreinheit ist in zwei Hinsichten gegeben. Sie kann beim einzelnen Teppich vorhanden sein, der z.B. einen Pol aus Polyamid oder Polyester und einen Rücken aus Polypropylen oder dergleichen aufweisen kann. Sie liegt aber auch in der zur Wiederverwertung anfallenden Gesamtmenge der Altteppiche vor, insofern die Herkunft und die Zusammensetzung des einzelnen Teppichstücks meist nicht bekannt ist und sich eine diesbezügliche Untersuchung einzelner Teppichstücke aus Kostengründen verbietet. Die Sortenvermischung hat überdies noch einen besonderen Aspekt, insofern außer thermoplastischen oder duroplastischen Kunststoffasern auch tierische oder pflanzliche Fasern wie Wolle oder Baumwolle zugegen sein können. Es muß also in einer Menge an Altteppichstücken hinsichtlich der Fasern praktisch mit allem gerechnet werden.

Im Hinblick auf die Fremdstoffe haben Untersuchungen gezeigt, daß die Belastung der Altteppiche bis zu 30 Gewichtsprozent betragen kann. Es handelt sich dabei um Schmutz, der im Laufe der Zeit in Gestalt von Staub oder in den Teppich hineingetretenen organischen oder mineralischen Partikeln in den Teppich hineingelangt ist und um Reste des Rückens, das heißt des Schaummaterials und der Füllstoffe sowie anhaftende Kleberreste.

Bemühungen zur Wiedergewinnung der textilen Anteile in reiner Form, die mit einer Reinigung der Altteppiche und einer Isolierung der Fremdstoffe einhergehen, sehen sich vor einem Anteil von bis zu 300 kg dieser Fremdstoffe pro Tonne Altteppich, die nach der aufwendigen Reinigung und Sortierung des Altteppichmaterials irgendwie dauerhaft unschädlich gemacht werden müssen.

Es hat nicht an Versuchen gefehlt, Teppichmaterial einer erneuten sinnvollen Nutzung zuzuführen, z.B. indem es zu Platten verpreßt worden ist.

So ist in der DE 24 57 848 A1 ein Preßstoffkörper beschrieben, der auch die Gestalt einer Platte haben kann, bei welchem Abfallmaterial von Teppichen geschnitzelt und mit einem Bindemittel in gepreßtem Zustand abbinden gelassen wird. Das Bindemittel kann unter anderem Phenolharz enthalten, aber auch ein schäumfähiges Bindemittel sein. Die Platte kann eine Deckschicht aus Papier, textilem Material, Kunststoff, Holz oder dergleichen aufweisen. Ein anderer Versuch dieser Art ist Gegenstand der DE 27 22 774 A1, in welcher die Verwertung von Abfällen von Autoteppichen und Nadelfilzen beschrieben ist, die thermoplastische Anteile aufweisen. Die Abfälle werden geschnitten, in einer Schicht angeordnet und über den Schmelzpunkt eines Teils der thermoplastischen Anteile erhitzt, gepreßt und abgekühlt. Als Beispiel für die thermoplastischen Anteile sind Polyethylen und Polypropylen genannt, die bereits bei 160 bis 180° genügend fließfähig sind, um die Gesamtmasse zu durchdringen und einen homogenen Preßstoffkörper zu bilden.

Auch die DD-PS 61 094 und die AT-PS 25 25 46 befassen sich mit dem Verpressen von textilen Abfällen zu Platten.

Gemeinsam ist den bisher erwähnten Versuchen, daß sie auf die Verwendung von Produktions- und Konfektionierungsabfällen gerichtet sind, das heißt sich mit unbenutztem Material gleichbleibender, wenn auch möglicherweise nicht sortenreiner Zusammensetzung befaßten. Das Problem, daß die bis zu 30 Gewichtsprozent der Gesamtmenge ausmachenden Fremdstoffe die Bindung der Platten und deren mechanische Eigenschaften beeinflussen, lag bei dem geschilderten Versuchen nicht vor und ist dementsprechend auch nicht in Angriff genommen worden. Dies ist vielmehr erst in der DE 41 37 744 A1 geschehen, bei der auch Altteppiche verarbeitet und beim Pressen einer Platte thermoplastische Teppichanteile besonders in oberflächennahen Bereichen aufgeschmolzen wurden, um hier eine Art Tragschicht eines Schichtwerkstoffs zu bilden. Es hat sich aber gezeigt, daß die nach der DE 41 37 744 A1 hergestellten Platten in ihren mechanischen Eigenschaften noch verbesserungsbedürftig sind.

Der Erfindung liegt die Aufgabe zugrunde, Altteppich umfassende Teppichreste mit minimalem Aufwand dauerhaft zu entsorgen.

Diese Aufgabe wird durch die Herstellung eines Formteils nach Anspruch 1 und das entsprechende Verfahren nach Anspruch 11 gelöst.

Es ergibt sich hierdurch ein neuartiger Holzwerkstoff von ansprechendem, durch Holzspäne gebildetem Äußeren. Bei einer Deckschicht aus solchen Holzspänen ist das Zusammenwirken mit dem plastifizierbaren, mit dem thermoplastischen Bindemittel versehenen Teppichmaterial von großer Bedeutung. Die Holzspäneschicht ist nach der Streuung sehr unregelmäßig ausgebildet. Sie wird durch das Pressen niedergedrückt. Die Versuchsergebnisse zeigen, daß sich Formteile mit glatter nahezu ebener Oberfläche herstellen lassen, die ohne Nacharbeit verwendet werden können. Die durch die zufällige Anordnung der flachen Holzspäne sich ergebende Unregelmäßigkeiten der Schichtdicke drücken sich nach innen weg und werden von dem thermoplastischen Teppichmaterial aufgenommen. Während also die äußere Oberfläche glatt ist, ist die Innere, dem verpreßten Teppichmaterial zugewandte Oberfläche der Späneschicht in ihrer Dicke unregelmäßig und wellig, was das plastifizierte Teppichmaterial jedoch ausgleichen kann. Dieser Werkstoff ist in seiner Art neu und besitzt sehr vorteilhafte Eigenschaften und sogar einen immanenten dekorativen Wert, der eine Verwendung ohne weitere Veredelung zuläßt. Der Verbrauch an Holz für die erfindungsgemäßen Formteile ist trotz ihres holzartigen Erscheinungsbildes gering, weil das Innere der Formteile nicht aus Holz, sondern aus dem Teppichmaterial besteht, welches auf diese Weise ohne großen zusätzlichen Aufwand wiederverwendet und dauerhaft und sicher entsorgt ist.

Die erfindungsgemäßen Formteile - in erster Linie aber keinesfalls ausschließlich Platten - sind von einer erstaunlichen Biegesteifigkeit, das heißt das Material besitzt einen hohen E-Modul. Um dies zu veranschaulichen, sei erwähnt, daß es mit den Händen kaum möglich ist, eine quadratische Platte des erfindungsgemäßen Materials von 6 mm Dicke um mehr als einen der Dicke entsprechenden Betrag durchzubiegen. Ein Durchbrechen läßt sich von Hand nicht herbeiführen.

Für die hohe Biegesteifigkeit des Produkts ist das Zusammenwirken mehrerer Merkmale von Bedeutung.

Es muß zunächst das Teppicbmaterial so intensiv zerkleinert werden, daß dem Zerkleinerungsprodukt nichts Teppichartiges mehr anhaftet. Die Zerkleinerung muß eine Zerlegung des Teppichmaterials bis in seine einzelnen Fasern ergeben, so daß das Zerkleinerungsprodukt eine Art grobfasriger Watte wird, was mit dem Ausdruck "fasriges Gewölle" gemeint ist.

Wenn ein solcher Füllstoff mit einem thermoplastischen, bei der Verarbeitungstemperatur geschmolzenen Bindemittel verpreßt wird, wird es von dem thermoplastischen Bindemittel ganz durchdrungen, und es bildet das thermoplastische Bindemittel gewissermaßen eine Matrix, in der die Fasern eingelagerte Verstärkungselemente bilden, so daß sich eine Art Verbundwerkstoff ergibt. Durch die feine Zerkleinerung des Teppicbmaterials ist das Volumen der das Teppichmaterial enthaltenden inneren Schicht des fertigen Formteils ziemlich homogen mit Fasern durchdrungen, so daß keine unverstärkten Zonen größeren Ausmaßes auftreten und die Schicht nach außen hin homogen verstärkt erscheint.

Der innere, das Teppichmaterial enthaltende und an sich schon recht stabile Bereich ist nun auf mindestens einer Seite, normalerweise jedoch auf beiden Seiten, mit einer Deckschicht aus verleimten Holzspänen versehen, die einen hohen E-Modul und eine hohe Zugfestigkeit gerade an die Stellen bringen, auf die es bei der Biegebeanspruchung besonders ankommt, nämlich in die äußeren Schichten. Es ergibt sich eine Art Sandwicheffekt mit einer erheblichen Versteifungswirkung.

Ein weiteres nicht zu erwartendes vorteilhaftes Ergebnis bei der Erfindung besteht darin, daß der hohe Anteil an Fremdstoffen in den verwerteten Altteppichen, also der Schmutz, die Schaumreste und die Kleberreste problemlos in die Formteile integriert wird und die Festigkeitseigenschaften des Materials eher positiv beeinflußt. Es ist also mit dem erfindungsgemäßen Verfahren möglich, Altteppiche so zu verarbeiten, wie sie angeliefert werden, und ohne aufwendige Reinigungs- und Separierprozesse daraus die erfindungsgemässen Formteile herzustellen.

Die Formteile haben eine gute Oberflächenqualität und können häufig eingesetzt werden, wie sie aus der Presse kommen.

Daß die Aufheizung des Materials in der Presse nicht so weit getrieben wird, daß sämtliche thermoplastischen Anteile schmelzen, hat seine Gründe: einerseits sollen durchaus Fasern in ihrer Faserstruktur und ihrem beispielsweise durch Verstrickung gewonnenen Eigenschaften erhalten bleiben, um in dem fertigen Werkstoff als verstärkendes Verbundmaterial zu wirken. Zum andern erforderte das Aufschmelzen aller thermoplastischen Anteile so hohe Temperaturen, wie sie mit den heutigen Heizflüssigkeiten für Pressen kaum darstellbar sind. Die hohen Temperaturen sind auch wegen der Wärmeverluste und nicht anzustreben. Die Aufheizung soll vielmehr gerade so weit gehen, daß die niedrigsten Schmelz- und Erweichungsbereiche überschritten werden und der Bindungsmechanismus über das Aufschmelzen und Verteilen unter Druck dieser thermoplastischen Komponente des Gesamtmaterials zum Tragen kommt.

Die Preßdauer wird so gewählt, daß die thermoplastische Bindung der inneren, das Teppichmaterial enthaltenden Schicht über die Dicke des Formteils möglichst gleichmäßig erfolgt, so daß ein insgesamt kompaktes Formteil erhalten wird. Die dazu erforderlichen Temperaturen sind in einem Bereich gelegen, der gleichzeitig zu einer Aushärtung des harzartigen Bindemittels ausreicht, mit dem die Holzspäne der Deckschichten beleimt sind.

Die Wärme muß ja von den Preßflächen her in die schlecht wärmeleitende Preßmasse hineingebracht werden, was eine gewisse Zeit erfordert, bis die Temperatur auch im Innern auf einen zum Schmelzen des thermoplastischen Bindemittels ausreichenden Wert gestiegen ist.

Die Anordnung der Holzspäne nach Anspruch 2 fördert die Ausbildung einer recht glatten Oberflächenschicht ohne Vorzugsrichtung parallel zur Fläche.

Ein bevorzugtes Ausführungsbeispiel ist Gegenstand des Anspruchs 3.

Es ergibt sich hierbei eine dekorative, besonders für das Bauwesen attraktive Oberfläche auf wirtschaftliche Weise, weil der Zerkleinerungsaufwand für die flachen Holzspäne der Deckschicht (flakes) geringer ist als für faserartige Holzspäne.

Im einzelnen können die Holzspäne der Deckschicht nach Anspruch 4 dimensioniert sein.

Das thermoplastische Bindemittel, das unter diesem Aspekt des häufigen Vorkommens und des niedrigen Schmelzpunktes in erster Linie in Betracht kommt, ist Polypropylen, welches z.B. als Rückenmaterial in modernen, als Auslegeware verwendeten Teppichmaterialien verwendet wird. Es hat einen Erweichungspunkt im Bereich von etwa 160° C und wird relativ dünnflüssig, was die Verteilung durch die Fasermasse hindurch fördert (Anspruch 7).

In Fällen, in denen das zur Verfügung stehende Teppichmaterial von Haus aus genügend an derartigen thermoplastischen Bindemitteln umfaßt, kann das Teppichmaterial insoweit so verwendet werden, wie es angeliefert worden ist. Es bedarf dann lediglich noch des Zusatzes des duroplastisch aushärtenden weiteren Bindemittels.

Wenn aber der eigene Gehalt des Teppichmaterials an niedrig schmelzendem thermoplastischen Bindemittel zu gering ist, kann derartiges Bindemittel dem Teppichmaterial auch zugesetzt werden, z.B. in Gestalt von sortenreinem, aus dem thermoplastischen Bindemittel bestehenden Abfallmaterial, z.B. von Teppichresten aus der Fabrikation oder der Konfektion.

Obwohl Ausgangspunkt der Erfindung das Problem der Altteppiche gewesen ist, ist sie nicht auf den ausschließlichen Einsatz solcher Altteppiche beschränkt, sondern es muß lediglich ein gewisser Anteil solcher Altteppiche vorhanden sein, dem aber auch andere oder gebrauchte Teppichabfälle und auch sonstige kleinteiligen Abfälle zugesetzt werden können.

Als Bindemittel für die Holzspäne der Deckschicht kommen duroplastisch aushärtende Bindemittel in Frage, die für sich genommen aus der Spanplattentechnologie bekannt und von denen die wichtigsten in Anspruch 8 aufgezählt sind.

Die bisher beschriebenen Eigenschaften der Erfindung sind von der Gestalt des Formteils unabhängig. Es können also bei der Herstellung des Materials durch Verpressen entsprechende Preßformen eingesetzt werden, die z.B. Auskleidungs- und Schalldämmungskörper und dergleichen ergeben.

Ein wesentliches Ausführungsbeispiel der Erfindung ist jedoch ein Formteil in Gestalt einer Platte, die z.B. in einer beheizbaren Doppelbandpresse gepreßt werden kann (Anspruch 9).

Das zur Herstellung des erfindungsgemäßen Formteils bzw. der Platte dienende Ausgangsmaterial aus zerkleinerten Teppichresten hat eine nicht unproblematische Struktur. Es besteht aus den Textilfasern, die das erwähnte "faserartige Gewölle" bilden, und den in dem Altteppich vorhandenen Fremdstoffen, die einen bestimmten Anteil an mineralischen Schmutzstoffen enthalten, die die Tendenz haben, durch das Gewölle hindurchzufallen, so daß sich beim Streuen der zu verpressenden Matte häufig eine Einseitigkeit des Formteils bzw. der Platte einstellt, weil sich Fremdstoffe auf der Unterlage ansammeln.

Um diesen Effekt zu vermeiden, hat es sich als zweckmäßig erwiesen, daß das Formteil einen Anteil von 0,5 bis 2 % Wachs oder Stearin enthält, der dem zu verpressenden Gesamtmaterial vor dem Aufstreuen z.B. durch Aufsprühen als Emulsion oder in sonstiger verflüssigter Form zugesetzt worden ist. Überraschenderweise hat sich gezeigt, daß ein solcher Zusatz eine wesentliche Verminderung der Entmischung der Fremdstoffanteile und der Faseranteile des zu verpressenden Gesamtmaterials mit sich bringt, so daß die unerwünschte Einseitigkeit der hergestellten Formteile bzw. Platten fast ganz unterdrückt werden kann (Anspruch 1O).

In den Ansprüchen 11 bis 16 sind die verfahrensmäßigen Aspekte der Erfindung festgehalten.

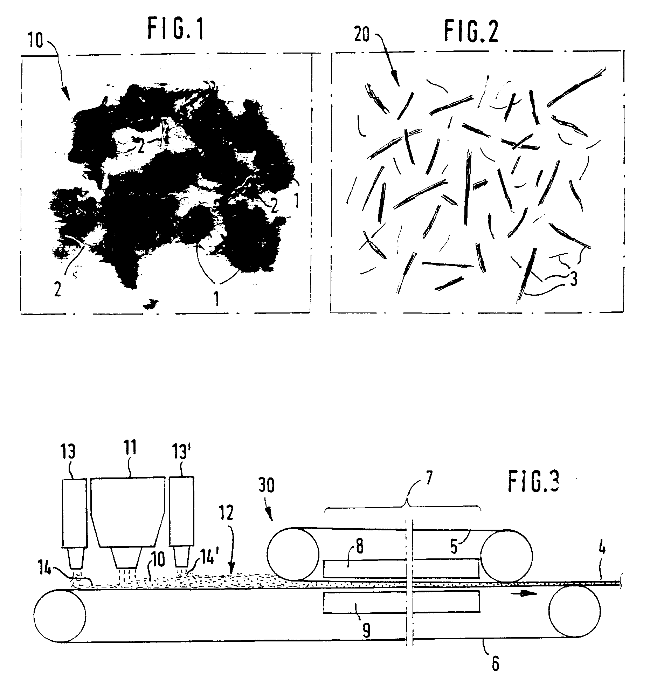

Anhand der Zeichnung wird die Erfindung näher erläutert.
Fig. 1 zeigt eine Ansicht des erfindungsgemäß zu verpressenden Teppichmaterials, etwa im Maßstab 1 : 1;
Fig. 2 zeigt eine Ansicht eines Ausführungsbeispiels eines Deckschicht-Materials aus beleimten länglichen faserartigen Holzspänen, etwa im Maßstab 1 : 1;
Fig. 3 zeigt eine schematische Seitenansicht einer Doppelbandpresse zur Herstellung von Plattenmaterial nach der Erfindung;
Fig. 4 zeigt eine Ansicht eines erfindungsgemäßen Plattenmaterials mit einem anderen Deckschicht-Material aus flachen dünnen Holzspänen;
Fig. 5 zeigt einen Querschnitt der Platte nach Fig. 6 in etwa 1,5-facher Vergrößerung;
Das in Fig. 1 wiedergegebene Teppichmaterial besteht aus Altteppich, der in einer Hackmaschine in etwa handtellergroße Stücke zerhackt und anschließend in einer Mühle fein zermahlen worden ist, wobei keinerlei Reinigung stattgefunden hat und die bis zu 30 % des Gewichts betragende Belastung mit Fremdstoffen, insbesondere Schmutz, Sand und anderen mineralischen Partikeln in dem Material verbleibt.

Die Zerkleinerung durch das Mahlen geht so weit, daß die Teppichstruktur vollkommen verloren geht und nur noch ein fasriges Gewölle übrigbleibt, welches sich beim Durchgang durch das Ausgangssieb der Mühle zu kleinen lockeren Bäuschen 1 agglomeriert. In dem gezeigten Ausführungsbeispiel hatte der Teppich einen Polyamid-Flor und einen Bändchenrücken aus Polypropylen. Die Rückenpartikel 2 sind noch als unterschiedliches Material erkennbar. Die thermoplastischen Anteile machen etwa 5 bis 30 Gewichtsprozent, in dem Ausführungsbeispiel etwa 20 Gewichtsprozent des gemahlenen Altteppichs aus.

Das Teppichmaterial 10 enthält von Haus aus genügend Polypropylen, welches als thermoplastischer Binder dient. Im anderen Fall muß zusätzliches Polypropylen oder ein vergleichbares thermoplastisches Bindemittel zugesetzt werden.

Fig. 2 zeigt ein erstes Holzmaterial 2O, welches für eine Deckschicht in Betracht kommt. Es handelt sich um faserartige, d.h. dünne biegsame und in Vergleich zum Querschnitt lange Holzspäne 3, die eine Größenverteilung mit einem Dickenmaximum bei etwa O,2 bis O,4 mm und einem Schlankheitsgrad von etwa 1 : 1O bis 1 : 1OO aufweisen. Als "Dicke" sei hier die kleinste Abmessung des Querschnitts verstanden. Die Holzspäne 3 werden durch Mahlen gewonnen. In Fig. 2 sind sie nur locker gestreut. Tatsächlich ist die Streuung dichter, so daß die Holzfasern 3 für sich allein eine praktisch geschlossene Schicht bilden, die unter dem Einfluß von Druck und Wärme zu einer kompakten holzartigen Deckschicht wird, wenn das Bindemittel aushärtet.

Das Bindemittel ist z.B. Phenolharz oder ein ähnliches harzartiges, duroplastisch aushärtendes Bindemittel, wie es von der Spanplattenherstellung bekannt ist und welches den Holzspänen 3 mit den dafür bekannten Techniken zugesetzt wird.

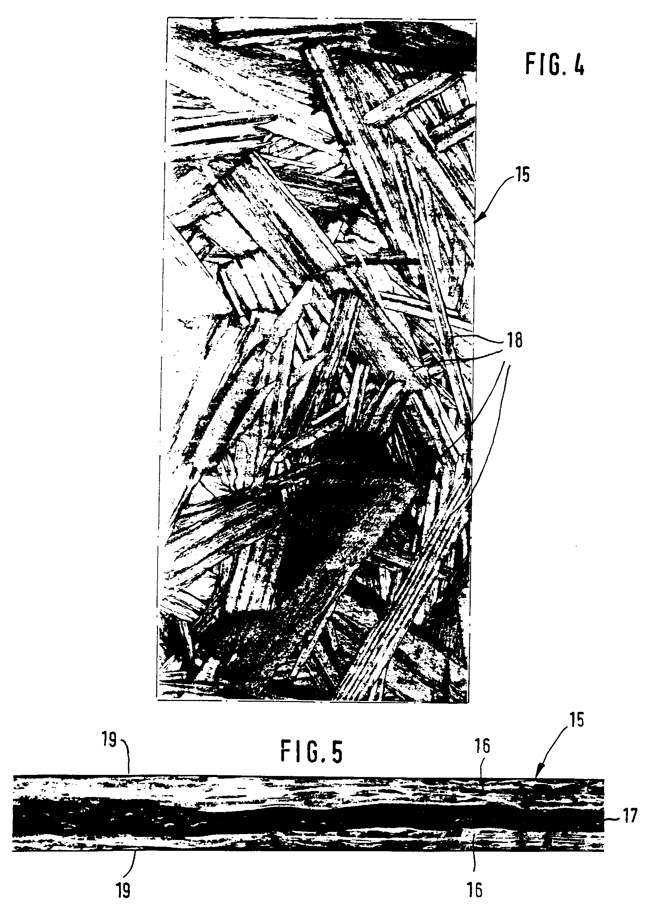

Das Ausgangsmaterial wird in der Doppelbandpresse 30 der Fig. 3 zu einer Plattenbahn 4 verpreßt. Die Doppelbandpresse 30 umfaßt ein oberes Formband 5 und ein unteres Formband 6 aus Stahlblech, die über Umlenkrollen endlos umlaufen und einer Preßstrecke 7 einander gegenüberliegend mit gleicher Geschwindigkeit im Sinne des Pfeiles vorlaufen. Im Bereich der Preßstrecke 7 sind die vorlaufenden Formbänder 5,6 durch entsprechende, nur schematisch angedeutete Einrichtungen 8,9 abgestützt, und es kann Wärme durch die Formbänder 5,6 hindurch auf die sich bildende Plattenbahn 4 übertragen werden.

Das untere Formband 6 besitzt eine vorgeschaltete Streustrecke, in der aus Vorratsbehältern 13,11,13' mittels geeigneter Streueinrichtungen eine geschichtete Matte oder Schüttung 12 hergestellt wird. Die Schüttung 12 umfaßt eine untere Schicht 14 aus dem Vorratsbehälter 13, die die untere Deckschicht ergibt, eine Schicht aus dem das thermoplastische Bindemittel enthaltenden Teppichmaterial 1O aus dem Vorratsbehälter 11 und eine obere Schicht 14' aus dem Vorratsbehälter 13', die die obere Deckschicht ergibt. Die Holzspäne in den Schichten 14,14' sind beleimt. Sie können z.B. aus dem Holzmaterial 2O der Fig. 2 mit den faserartigen Holzspänen 3 oder den größeren flachen Holzspänen 18 bestehen, die im Zusammenhang mit Fig. 4 und 5 noch beschrieben werden.

Die Schüttung 12 wird beim Einlauf zwischen die Formbänder 5,6 verdichtet und in der Preßstrecke 7 nach einem vorgebbaren Zeit-Temperatur-Druckdiagramm ausgehärtet. Die fertig ausgehärtete Plattenbahn wird in dem letzten Stück der Doppelbandpresse oder in einer separat nachgeschalteten Kühleinrichtung abgekühlt und kann dann konfektioniert werden. Das Material der Plattenbahn 4 weist eine dichte ziemlich glatte holzartige Oberfläche auf, deren Struktur von dem für die Deckschichten eingesetzten Holzmaterial abhängt.

Bei dem Holzmaterial 2O ist die Oberfläche fast strukturlos, wie es etwa von MDF-Platten bekannt ist. Über die Dicke der Platte 14 ist ein Strukturunterschied mit dem Auge nicht feststellbar, wie Fig. 5 zeigt. In dem vorliegenden Ausführungsbeispiel war indessen auch eine möglichst homogene Verteilung der Komponenten angestrebt.

In den Fig. 4 und 5 ist jedoch eine Platte 15 wiedergegeben, die auf beiden Seiten eine Deckschicht 16 aus großen flachen und sehr dünnen Holzspänen von etwa 0,2 mm Stärke und im großen und ganzen rechteckigem Umriß besteht. Es wird bei der Herstellung von Platte 15 zunächst die untere Deckschicht 16 mit beleimten Spänen 18 bestreut, darauf die Mittelschicht 17 aus dem erfindungsgemäß zerkleinerten Teppichmaterial mit zwei Bindemitteln und darauf die obere Deckschicht 16 aus den beleimten dünnen Spänen 18. Das Ganze wird durch die Doppelbandpresse 30 gefahren. Die Wirrwarrstreuung der Späne 18 führt zu zufälligen Unterschieden der lokalen Anhäufung von Holzmaterial und bei einem bestimmten Zusammenpressungsdruck zu unterschiedlichen Schichtdicken der Deckschichten 16. Da die Mittelschicht 17 aus dem das thermoplastische Bindemittel enthaltenden Teppichmaterial bei der Anwendung von Druck und Wärme in der Preßstrecke 7 stark thermoplastische Eigenschaften aufweist, drückt sich das Dickenprofil der Schichten 16 in der aus Fig. 7 ersichtlichen Weise nach innen, während die äußeren Oberflächen 19 praktisch eben bleiben. Es wird ein sehr biegefestes Verbundmaterial mit der aus Fig. 6 ersichtlichen interessanten Oberfläche erhalten, die trotz der willkürlichen Streuung eben ist und allenfalls an den Rändern der obersten Späne 18 geringfügige Stufen in der Größenordnung der vorwiegenden Spänedicke, also von O,1 bis O,3 mm Höhe aufweist.

Für die Herstellung der Plattenbahn 14 nach Fig. 3 wurde bei Versuchen eine Doppelbandpresse nach der DE-PS 21 57 764 verwendet. Die Temperatur der Formbänder 5,6 gemäß Fig. 3 betrug etwa 2OO°C, der Druck in der Preßstrecke 7 ca. 5OO N/cm². Die Zeit während der das Teppichmaterial dieser Temperatur und diesem Druck ausgesetzt waren, belief sich auf 9O - 18O s.

## Patentansprüche

1. Formteil, welches zu einem Fasergewölle zerkleinertes Teppichmaterial (10) mit zumindest einem Anteil an ungereinigtem Altteppich umfaßt, wobei das Teppichmaterial mit geschmolzenem thermoplastischem Bindemittel in einem Anteil von 5 bis 30 Gewichtsprozent des Teppichmaterials durchsetzt ist, wobei das Formteil auf mindestens einer Seite eine Deckschicht aus beleimten dünnen Holzspänen trägt und wobei das thermoplastische Bindemittel und die Deckschicht zu einem kompakten Gebilde verpreßt sind.

2. Formteil nach Anspruch 1, dadurch gekennzeichnet, daß die Holzspäne (3,18) mit willkürlicher Faserrichtung im wesentlichen parallel zur Formteiloberfläche angeordnet sind.

3. Formteil nach Anspruch 2, dadurch gekennzeichnet, daß die Deckschicht aus flachen dünnen Holzspänen (18) besteht.

4. Formteil nach Anspruch 3, dadurch gekennzeichnet, daß die Holzspäne (18) überwiegend eine Dicke von O,1 bis O,3 mm und einen Umriß im wesentlichen in Gestalt eines Rechtecks aufweisen, dessen Länge 2 bis 1O cm und dessen Breite 2 bis 3O mm betragen.

5. Formteil nach Anspruch 1 oder 2, dadurch gekennzeichnet, daß die Holzspäne (3) im wesentlichen eindimensional länglich ausgebildet sind.

6. Formteil nach Anspruch 5, dadurch gekennzeichnet, daß die Holzspäne (3) faserartig ausgebildet sind und eine Größenverteilung mit einem Dickenmaximum bei etwa O,2 bis O,4 mm und einem Schlankheitsgrad von etwa 1 : 1O bis 1 : 1OO aufweisen.

7. Formteil nach einem der Ansprüche 1 bis 6, dadurch gekennzeichnet, daß als thermoplastisches Bindemittel Polypropylen zugegen ist.

8. Formteil nach einem der Ansprüche 1 bis 7, dadurch gekennzeichnet, daß als duroplastisch aushärtendes Bindemittel für die Holzspäne (3,18) Harnstoff-Formaldehyd-Harz, Melamin-Formaldehyd-Harz, Phenol-Formaldehyd-Harz oder Isocyanate zugegen sind.

9. Formteil nach einem der Ansprüche 1 bis 8, dadurch gekennzeichnet, daß das Formteil eine Platte (4,15) ist.

10. Formteil nach einem der Ansprüche 1 bis 9, dadurch gekennzeichnet, daß das Formteil einen Anteil von O,5 bis 2 Gewichtsprozent Wachs oder Stearin enthält.

11. Verfahren zur Herstellung eines Formteils aus zerkleinertem Teppichmaterial, bei welchem das Teppichmaterial in Anwesenheit eines thermoplastischen Bindemittels unter Wärmezufuhr und mit einer Deckschicht zu dem Formteil verpreßt wird, dadurch gekennzeichnet, daß als Teppichmaterial ein solches mit mindestens einem Anteil an Altteppich verwendet wird, daß das Teppichmaterial ungereinigt zu einem überwiegend fasrigen Gewölle zerkleinert wird, daß aus dem Teppichmaterial (1O) eine Matte gestreut oder gelegt wird, daß vor, nach oder sowohl vor als auch nach dem Streuen oder Legen der Matte eine Schicht (14,14') aus parallel zur Formteiloberfläche orientierten beleimten Holzspänen (3,18) gestreut wird und daß das zerkleinerte Teppichmaterial in Anwesenheit eines thermoplastischen Bindemittels in einem Anteil von 5 bis 30 Gewichtsprozent des Teppichmaterials zusammen mit den Holzspänen (3,18) bei einer oberhalb des Schmelzpunkts des thermoplastischen Bindemittels, jedoch unterhalb des Schmelzpunkts etwaiger sonst in der gesamten Masse enthaltener thermoplastischer Bestandteile gelegenen Temperatur zu einem kompakten Gebilde verpreßt wird.

12. Verfahren nach Anspruch 11, dadurch gekennzeichnet, daß das thermoplastische Bindemittel aus dem Teppichmaterial stammt.

13. Verfahren nach Anspruch 11, dadurch gekennzeichnet, daß zumindest ein Teil des thermoplastischen Bindemittels dem Teppichmaterial zugesetzt wird.

14. Verfahren nach einem der Ansprüche 11 bis 13, dadurch gekennzeichnet, daß das Teppichmaterial zunächst durch Hacken in Stücke mit einer größten Abmessung im Bereich von etwa 5 bis 15 cm vorzerkleinert und anschließend gemahlen oder gerissen wird.

15. Verfahren nach Anspruch 14, dadurch gekennzeichnet, daß das Mahlen fortgesetzt wird, bis das Teppichmaterial durch ein Sieb einer wählbaren Feinheit durchgeht.

16. Verfahren nach einem der Ansprüche 11 bis 155, dadurch gekennzeichnet, daß die Gesamtmischung vor dem Verpressen mit einem Zusatz von Wachs in einer Menge von 0,5 bis 2 Gewichtsprozent der Gesamtmasse versehen wird.
